# EUROPÄISCHE PATENTSCHRIFT

(11) **EP 1 279 550 B1**
(45) Veröffentlichungstag und Bekanntmachung des Hinweises auf die Patenterteilung: **31.08.2011**
(21) Anmeldenummer: 02015792.1
(22) Anmeldetag: 15.07.2002
(51) Int. Cl.: B60L 9/28, B60L 7/06

(54) **Bremsvorrichtung**
Braking device
Dispositif de freinage

(30) Priorität: 27.07.2001 DE 10136486
(43) Veröffentlichungstag der Anmeldung: 29.01.2003
(73) Patentinhaber: SIEMENS AKTIENGESELLSCHAFT, 80333 München (DE)
(72) Erfinder: Heidt, Hans-Hermann, 91074 Herzogenaurach (DE); Weschta, Alois, Dr., 91054 Buckenhof (DE)

(56) Entgegenhaltungen:
- DE-A- 2 919 530

## Beschreibung

Die Erfindung betrifft eine Bremsvorrichtung für einen Zug.

Züge, die als Triebwagen ausgebildet sind, haben eine verteilte Antriebstechnik. Als Beispiel seien hier der ICE 3 der DB AG oder Shinkansen-Züge der japanischen Bahnen genannt.

Dies bedeutet, daß sich in einem ersten Wagen ein Trafo befindet, der die Traktionsleistung bereit stellt. In einem zweiten Wagen oder auch in weiteren Wagen befinden sich Umrichter, die die von der Sekundärwicklung des Trafos bereitgestellte elektrische Spannung gleichrichten und in einem Zwischenkreis des Umrichters zwischenpeichern . Die gleichgerichtete Spannung des Zwischenkreises wird anschließend über einen Ausgangswechselrichter frequenz- und amplitudenvariabel zur Speisung eines Motors zwecks Stellung von Moment und Drehzahl genutzt.

Im Falle des Bremsens, wird der Motor mittels geeigneter Elektronik so in eine generatorische Betriebsart gesteuert, daß er elektrische Energie in den Zwischenkreis des Umrichters zurückspeist. Er entzieht dabei dem vorher angetriebenen Systen kinetische Energie. Dies führt zu einem Anstieg der Zwischenkreisspannung. Durch geeignete Steuerung des umrichter-eingangssseitigen sogenannten 4-Quadrantenstellers ist es möglich, die in den Zwischenkreis vom Motor zurückgespeiste elektrische Energie in das speisende Netz über die Trafosekundärwicklung zurückzuspeisen.

Es gibt jedoch Fälle, in denen das speisende Netz nicht mehr in der Lage ist, elektrische Energie aufzunehmen. Dies äußert sich in der Regel in einem unzulässigen Spannungsanstieg des Netzes.

Da aber weiter elektrisch generatorisch gebremst wird, muß die nun im Zwischenkreis des Umrichters anfallende generatorisch erzeugte Energie venichtet werden. Dies geschieht heute in der Weise, daß ein in der Regel elektronischer Schalter (z.B.: IGBT oder GTO), auch Bremssteller genannt, die im Zwischenkreis überschüssig anfallende Energie durch eine geeignet gesteuerte Verbindung der beiden Pole des Zwischenkreises mit einem Bremswiderstand in Joulsche Wärme umwandelt.

Dazu ist es notwendig, daß in der Regel zusätzlich zu dem umrichtereingangsseitigen 4-Quadrantensteller und dem umrichterausgangsseitigen Wechselrichter ein elektronischer Bremssteller einschließlich der Verbindungsleitungen zum Bremswiderstand aufgebaut werden muß.

Befindet sich der Bremswiderstand zum Beispiel aus aerodynamischen oder einbautechnischen Gründen auf dem Nachbarwagen des Wagens, in dem sich der Trafo befindet, so müssen zusätzlich zu den Verbindungsleitungen von der Trafosekundärwicklung zum 4-Quadrantensteller die Verbindungsleitungen zum Bremswiderstand über den Wagenübergang gezogen werden. Dies bedeutet, daß je nach Anzahl der an den Trafo angeschlossenen Umrichter und eingesetzten Bremswiderstände, eine Vielzahl zusätzlicher dicker Leistungsleitungen über die Wagenübergänge geführt werden müssen. Damit verbunden sind zum Teil erhebliche Probleme, die den verfügbaren Einbauraum und die mechanische Auslegung der Leitungsverbindung zwischen den Wagen betreffen.

Insbesondere bei zweistöckigen Wagen kann wegen der maximal möglichen Höhe des Zuges der Bremswiderstand nur auf dem Dach eines nur zu diesem Zweck angekoppelten einstöckigen Wagens angeordnet sein. Das erfordert, wenn den Umrichtern in den einzelnen Wagen eigene Bremssteller zugeordnet sind, spezielle Leitungen der Bremssteller, die von Wagen zu Wagen zum Bremswiderstand führen.

Der Erfindung liegt die Aufgabe zugrunde, eine Bremsvorrichtung anzugeben, mit der aufwendige und teuere Leitungen, die insbesondere von einem Wagen zum anderen geführt werden müssen, eingespart werden können. Es soll vermieden werden, dass ein zusätzlicher elektronischer Schalter als Bremssteller inklusive der notwendigen Leitungsführung zu einem Bremswiderstand benötigt wird, falls der Antriebsmotor, der über einen Umrichter gespeist wird, generatorisch betrieben wird und das speisende Netz nicht mehr in der Lage ist, Energie aufzunehmen.

Dieser Bremssteller ist parallel zu einem bereits installierten 4-Quadrantensteller aufgebaut, und besitzt in der Regel eine separarte Leitungsverbindung zum Bremswiderstand, der sich zum Beispiel auf dem gleichen oder einem anderen Wagen befindet, als der Trafo für die Ankopplung an das speisende Netz. Es müssen zusätzliche Leitungen parallel zu den Verbindungsleitungen verlegt werden, die den umrichtereingangsseitigen 4-Quadrantenstellers mit der Trafosekundärwicklung verbinden.

Des weiteren soll das Problem gelöst werden, dass keine zusätzlichen Leitungen über den Wagenübergang verlegt werden müssen, die für die hohen Ströme des Bremswiderstandes, sofern dieser sich ebenfalls auf dem Trafowagen befindet , ausgelegt sein müssen. Gleiches gilt für Leitungen des Bremsstellers, die durch einen dazwischenliegenden Wagen geschleift werden müssen.

Die Aufgabe wird erfindungsgemäß durch die Merkmalskombinatin des Hauptanspruches gelöst. Eine vorteilhafte Ausgestaltung ist durch die Merkmale des Unteranspruches gegeben.

Die Verbindungsleitungen des 4-Quadrantenstellers zu den Trafosekundärwicklungen werden mittels des Umschalters wahlweise mit der Trafosekundärwicklung oder dem Bremswiderstand verbunden und der 4-Quadrantensteller wird als elektronischer Bremssteller zum gesteuerten bzw. geregleten Verbinden des Bremswiderstandes mit dem Zwischenkreis genutzt. Der 4-Quadrantensteller wird dabei so gesteuert bzw. geregelt, daß er die vom als Generator betriebenen Motor über den ausgangsseitigen Wechselrichter in den Zwischenkreis gespeiste Energie in geregelter Weise an den Bremswiderstand weitergibt, die dort in Joulsche Wärme umgewandelt wird. Zur Umschaltung zwischen Trafosekundärwicklung und Bremswiderstand wird ein Umschalter eingesetzt, der vorteilhaft durch die Steuerung des Umrichters geeignet gesteuert wird.

Folgende Vorteile werden durch die vorgeschlagene Erfindung erzielt:
Durch die abwechselnde Nutzung des umrichtereingangsseitigen 4-Quadrantenstellers zur Rückspeisung über die Trafowicklungen bzw. zum Betrieb eines Bremswiderstandes entfällt
   a) ein zusätzlicher elektronischer Schalter (Chopper)
   b) eine geeignete Schaltung zur Steuerung des Choppers
Durch die gleichzeitige Nutzung der Verbindungsleitungen zwischen 4-Quadrantensteller und Trafosekundärwicklungen insbesonders über den oder die Wagenübergänge zwischen den Wagen mit den Umrichtern und dem Wagen mit dem Trafo entfällt die technisch aufwendige Realisierung zusätzlicher dicker Leitungsverbindungen über die Wagenübergänge und
   die aufwendige Verlegung separater Leitungen durch Wagen , die zwischen den Wagen mit den Umrichtern und dem Wagen mit dem Trafo liegen.
Somit ergeben sich zusätzliche Gewichtsersparnisse durch den Entfall dieser Leitungen.

Der erfinderische Schritt liegt in der Erkenntniss, daß der 4 Quadrantensteller aufgrund seines Aufbaues und seiner Anbindung an den Zwischenkreis des Umrichters in Verbindung mit einem Bremswiderstand und einer geeigneten Steuerung die gleiche Funktion erfüllen kann wie ein separater Bremssteller (oder auch Chopper genannt), der mit dem Zwischenkreis verbunden ist. Des weiteren werden die gleichen Leitungen, die vom Wagen mit dem Trafo zum Wagen mit dem Umrichter führen genutzt und so die Anzahl der zu verlegenden Leitungen minimiert.

Ein Ausführungsbeispiel der Bremsvorrichtung nach der Erfindung wird anhand der Zeichnung näher erläutert:
Die Figuren 1 und 3 zeigen die Bremsvorrichtung nach der Erfindung.
Die Figur 2 zeigt den Stand der Technik mit zusätzlichen Leitungen des Bremsstellers.

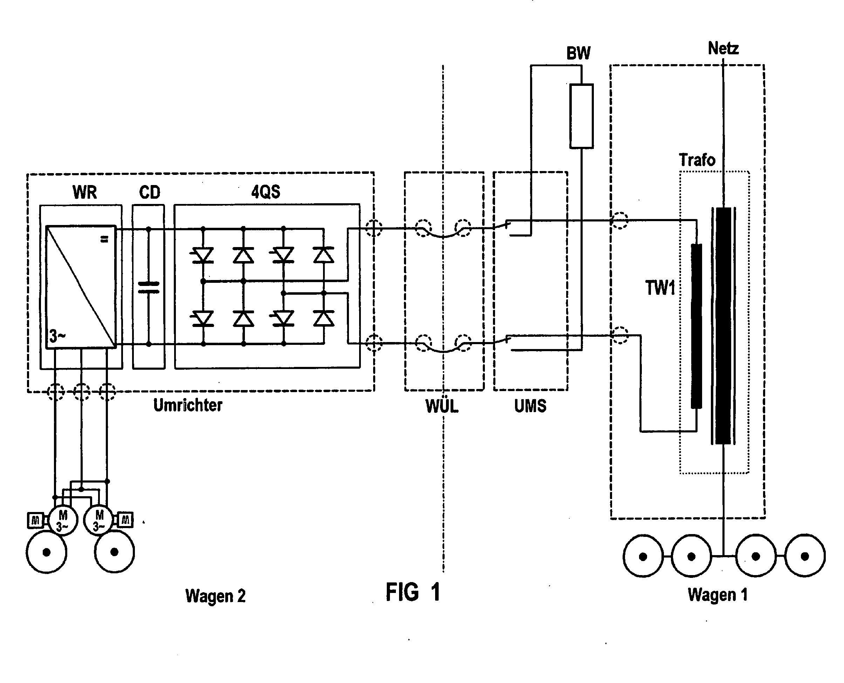

Figur 1 zeigt das Schaltbild eines Aufbaues bestehend aus zwei benachbarten Wagen, z.B. eines Triebwagens. Im Wagen 2 befindet sich der Umrichter bestehend aus Wechselrichter (WR) Zwischenkreis (CD) und 4-Quadrantensteller (4QS). Im Wagen 1 befindet sich der Umschalter (UMS) zum Umschalten zwischen Bremswiderstand BW und Trafosekundärwicklung TW1. Die beiden Wagen sind elektrisch über die Wagenübergangsleitungen (WÜL) verbunden. Die Steuerung des Umschalters (UMS) erfolgt z.B. durch die Steuerung des Umrichters.

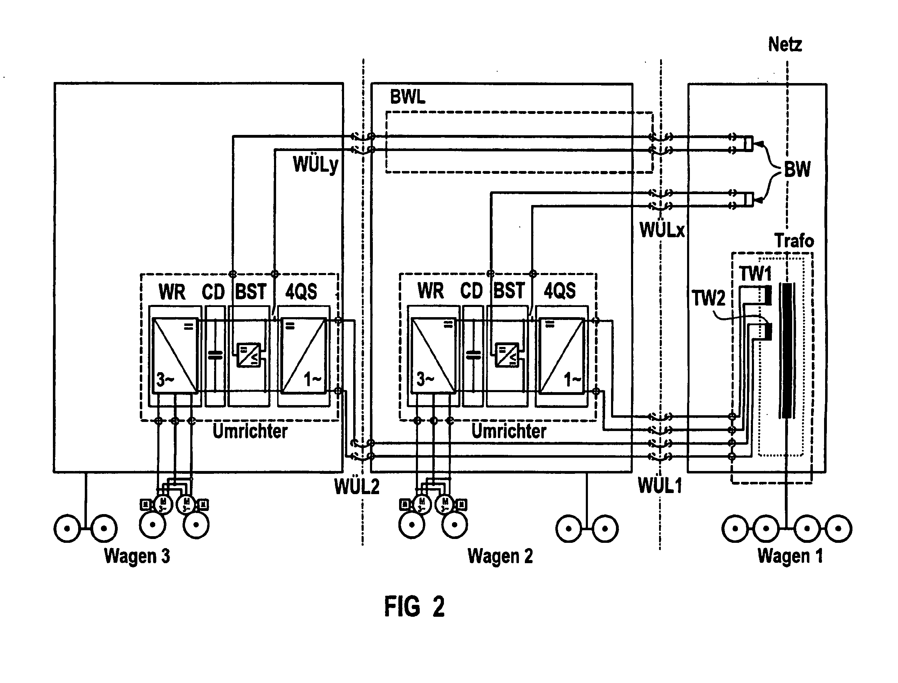

Figur 2 zeigt das Schaltbild eines Aufbaues bestehend aus drei benachbarten Wagen, z.B. eines Triebwagens. Im Wagen 2 und 3 befinden sich die Umrichter, jeweils bestehend aus Wechselrichter (WR) Zwischenkreis (CD), separatem Bremssteller (BST) oder auch Chopper genannt und 4-Quadrantensteller (4QS).
Im Wagen 1 befinden sich der Trafo mit den Trafosekundärwicklungen TW1 und TW2 und die Bremswiderstände (BW).
Die Wagen 1 und 2 sind elektrisch über die Wagenübergangsleitungen (WÜL1) und zusätzlich über (WÜLx) verbunden.
Die Wagen 2 und 3 sind elektrisch über die Wagenübergangsleitungen (WÜL2) und zusätzlich über (WÜLy) verbunden.

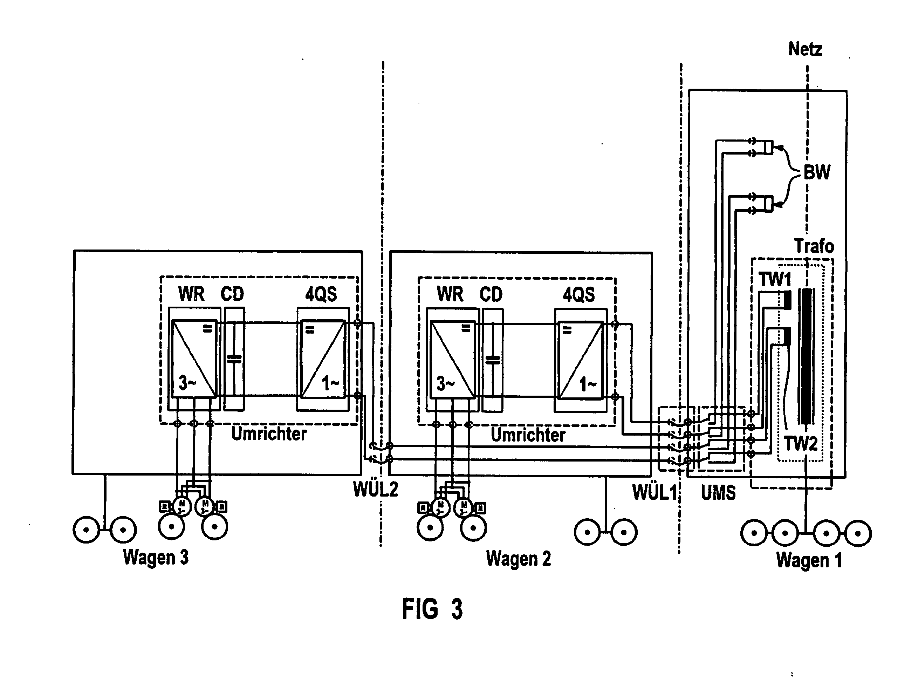

Figur 3 zeigt wie Fig 2 das Schaltbild eines Aufbaues bestehend aus drei benachbarten Wagen, z.B. eines Triebwagens. Im Wagen 2 und 3 befinden sich die Umrichter jeweils bestehend aus Wechselrichter (WR) Zwischenkreis (CD) und 4-Quadrantensteller (4QS).
Im Wagen 1 befindet sich der Umschalter (UMS) zum Umschalten zwischen den Bremswiderständen BW und den Trafosekundärwicklungen TW1 und TW2, der Trafo und die Bremswiderstände.
Die Wagen 1 und 2 sind elektrisch nur über die Wagenübergangsleitungen (WÜL1) verbunden.
Die Wagen 2 und 3 sind elektrisch nur über die Wagenübergangsleitungen (WÜL2) verbunden.

Im Vergleich zwischen Figur 2 und 3 ist deutlich der Vorteil der Nutzung des 4-Quadrantenstellers 4QS als Bremssteller zu erkennen, nämlich im Entfallen der Wagenübergangsleitungen (WÜLx) und (WÜLy) und der Bremswiderstandszuleitungen im Wagen 2 (BWL1).
Des weiteren entfällt der Bermssteller (BST) im Vergleich zu Figur 2.

## Patentansprüche

1. Bremsvorrichtung für einen Zug, bei der Verbindungsleitungen, die von einem 4-Quadrantensteller (4QS) zur Sekundärwicklung (TW) eines Transformators führen, einen Umschalter (UMS) enthalten, durch den der 4-Quadrantensteller (4QS) wahlweise mit der Sekundärwicklung (TW) oder mit einem Bremswiderstand (BW) verbindbar ist.

2. Bremsvorrichtung nach Anspruch 1,
**dadurch gekennzeichnet, dass** der 4-Quadrantensteller (4QS)als elektronischer Bremssteller wirkt zum gesteuerten Verbinden des Bremswiderstandes (BW) mit einem Zwischenkreis.

## Claims

1. Braking device for a train, in which connecting lines which lead from a 4-quadrant controller (4QS) to the secondary winding (TW) of a transformer contain a changeover switch (UMS), by means of which the 4-quadrant controller (4QS) can be selectively connected to the secondary winding (TW) or to a braking resistor (BW).

2. Braking device according to Claim 1,
**characterized in that** the 4-quadrant controller (4QS) acts as an electronic brake controller for control connection of the braking resistor (BW) to an intermediate circuit.

## Revendications

1. Dispositif de freinage d'un train dans lequel des lignes de communication, qui vont d'un régleur ( 4QS ) à 4 cadrans à l'enroulement ( TW ) secondaire d'un transformateur, comprennent un commutateur ( UMS ) par lequel le régleur ( 4QS ) à 4 cadrans peut être relié au choix à l'enroulement ( TW ) secondaire ou à une résistance ( BW ) de frein.

2. Dispositif de freinage suivant la revendication 1, **caractérisé en ce que** le régleur ( 4QS ) à 4 cadrans sert de régleur électronique de frein pour la liaison commandée de la résistance ( BW ) de frein à un circuit intermédiaire.
